# EUROPÄISCHE PATENTANMELDUNG

(11) **EP 3 502 536 A1**
(43) Veröffentlichungstag der Anmeldung: **26.06.2019**
(21) Anmeldenummer: 18200297.2
(22) Anmeldetag: 15.10.2018
(51) Int. Cl.: F16L 27/02, F16L 27/10

(54) **FLUIDKUPPLUNGSANORDNUNG**

(30) Priorität: 20.12.2017 DE 102017223403
(71) Anmelder: ContiTech MGW GmbH, 34346 Hannoversch-Münden (DE)
(72) Erfinder: Kreidner, Harald, 34346 Hann. Münden (DE); Flach, Axel, 34537 Bad Wildungen (DE); Siegel, Klaus-Alexander, 37154 Northeim (DE)
(74) Vertreter: Finger, Karsten

(57) **Zusammenfassung**

Die Erfindung betrifft eine Fluidkupplungsanordnung (1), mindestens aufweisend eine Kupplungshülse (1A) und einen Kupplungsstecker (1B) und eine zwischen dem Kupplungsstecker (1B) und der Kupplungshülse (1A) angeordnete O-Ring-Dichtung, wobei Kupplungshülse (1A) und Kupplungsstecker (1B) rotatorisch, translatorisch und kardanisch gegeneinander bewegbar angeordnet sind. Der Erfindung lag daher die Aufgabe zugrunde, eine Fluidkupplungsanordnung (1) der eingangs geschilderten Art so zu verbessern, dass möglichst kein Schmutz zwischen die zusammengesteckten Kupplungsteile (1A, 1B) eindringen kann. Diese Aufgabe wird dadurch gelöst, dass die Fluidkupplungsanordnung (1) ein Schmutzschutzelement (5) aufweist, dass derart angeordnet ist, dass es sowohl radial zwischen den Kupplungsteilen (1A, 1B) als auch axial zwischen der O-Ring-Dichtung (3) und der zur Atmosphäre offenen Seite (1D, 6) der Fluidkupplungsanordnung (1) zu liegen kommt.

## Beschreibung

Die Erfindung betrifft eine Fluidkupplungsanordnung, mindestens aufweisend eine Kupplungshülse und einen Kupplungsstecker und eine zwischen dem Kupplungsstecker und der Kupplungshülse angeordnete O-Ring-Dichtung, wobei Kupplungshülse und Kupplungsstecker rotatorisch, translatorisch und kardanisch gegeneinander bewegbar angeordnet sind.

Gattungsgemäße Fluidkupplungsanordnungen sind in der Fluidtechnik zur Förderung einer Vielzahl von Fluiden im Einsatz. Bei den zu verbindenden Fluidleitungen und Kupplungsteilen kommt es beim Einbau, aber teilweise auch schon bei der Herstellung zu Abweichungen bei den Sollmaßen, sodass die rotatorische, translatorische oder kardanische Beweglichkeit der Kupplungsbauteile bei der Montage sehr hilfreich, teilweise sogar Voraussetzung ist.

Die DE 10 2014 211 844 A1 zeigt eine derartige Fluidkupplungsanordnung, bei der die Kupplungsteile sowohl lösbar als auch unlösbar und sowohl mittels Rastverschluss oder auch zusätzlichen Verbindungsteilen miteinander verbindbar sind. Dabei weist die Fluidkupplungsanordnung eine begrenzte rotatorische, translatorische und kardanische Beweglichkeit der Kupplungsteile auf. Um die Fluidkupplungsanordnung auch im Hinblick auf diese Bewegbarkeit abzudichten, kommt ein O-Ring oder ein elastisches Verbindungselement zum Einsatz.

Beim Einsatz eines O-Ringes zwischen den zusammengesteckten Kupplungsteilen besteht bei einer solchen Kupplung die Gefahr, dass Schmutzpartikel aus der umgebenden

Atmosphäre in das Innere zwischen die Kupplungsteile eindringen können. Dies kann zu Undichtigkeiten im Bereich des O-Rings und sogar zu dessen Zerstörung führen.

Der Erfindung lag daher die Aufgabe zugrunde, eine Fluidkupplungsanordnung der eingangs geschilderten Art so zu verbessern, dass möglichst kein Schmutz zwischen die zusammengesteckten Kupplungsteile eindringen kann.

Diese Aufgabe wird dadurch gelöst, dass die Fluidkupplungsanordnung ein Schmutzschutzelement aufweist, dass derart angeordnet ist, dass es sowohl radial zwischen den Kupplungsteilen als auch axial zwischen der O-Ring-Dichtung und der zur Atmosphäre offenen Seite der Kupplung zu liegen kommt.

Ein derartiges Schmutzschutzelement hat den Vorteil, dass es das Eindringen von Schmutzpartikeln in das Innere der Fluidkupplungsanordnung bis zum O-Ring verhindern kann. Dabei kann es so ausgelegt werden, dass es besonders widerstandsfähig gegen äußere Umwelteinflüsse ist, weil auf eine besondere Abdichtungsfähigkeit keine Bedeutung gelegt werden muss.

In einer Weiterbildung der Erfindung ist das Schmutzschutzelement als Lippendichtring ausgelegt, wobei die Dichtlippe zu der zur Atmosphäre offenen Seite der Kupplung ausgerichtet ist.

Ein Lippendichtring weist eine hochelastische Lippe auf, die aufgrund ihrer Elastizität sicher an der ihr zugeordneten Anlagefläche anliegt, wobei aufgrund ihrer Lippenlänge auch kardanische Kippungen in gewissem Maße möglich sind. Dringen Partikel von der offenen Seite der Kupplung zwischen die Kupplungsbauteile ein, stoßen diese gegen die Dichtlippe, was unter Umständen den Anpressdruck der Dichtlippe noch verstärkt und ein weiteres Eindringen der Schmutzpartikel zuverlässig verhindert.

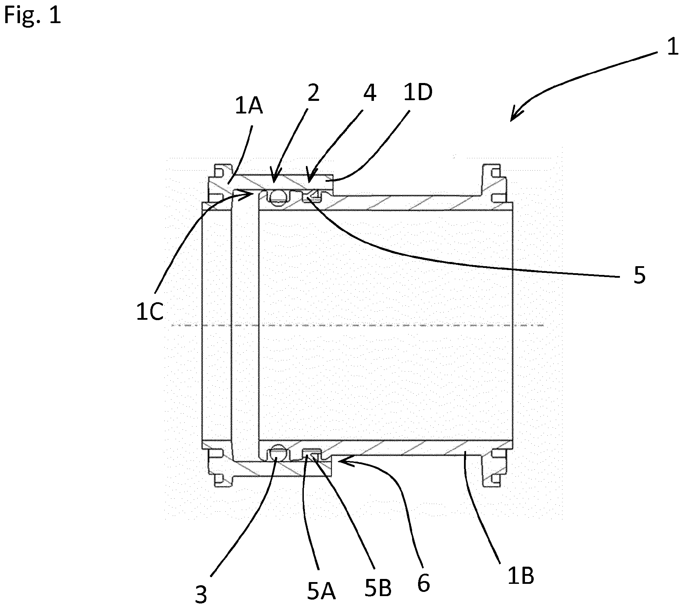

Anhand der Zeichnung wird nachstehend ein Beispiel der Erfindung näher erläutert. Die Figur 1 zeigt eine erfindungsgemäße Fluidkupplungsanordnung 1 mit einer Kupplungshülse 1A und einem Kupplungsstecker 1B, an denen jeweils auf nicht dargestellte Weise weitere fluidführende Bauteile anschließbar sind.

Der Kupplungsstecker 1B ist in die Kupplungshülse 1A eingeschoben, wobei zwischen Kupplungsgehäuse 1A und Kupplungsstecker 1B ein Spalt 1C verbleibt. Die Kupplungshülse 1A weist ein dem Kupplungsstecker 1B zugewandtes Ende 1D auf. Außerdem weist der Kupplungsstecker 1B eine Ringnut 2 auf, in der eine O-Ring-Dichtung 3 angeordnet ist. Der Kupplungsstecker 1B weist weiterhin eine zweite Ringnut 4 auf, in der ein Lippendichtring 5 angeordnet ist. Der Lippendichtring 5 weist einen Ringskörper 5A und eine Dichtlippe 5B auf, wobei die Dichtlippe 5B derart ausgerichtet ist, dass sie einerseits gegen die Kupplungshülse 1A radial anstößt und andererseits axial in Richtung auf das dem Kupplungsstecker 1B zugeordnete Ende 1D der Kupplungshülse 1A weist.

Das Ende 1D der Kupplungshülse 1A bildet eine Öffnung 6, durch die hier nicht dargestellte Schmutzpartikel in die Öffnung 6 und den Spalt 1C eindringen können.

Die Dichtlippe 5B verhindert, dass die eingedrungenen Partikel bis zur O-Ring-Dichtung 3 in dem Spalt 1C vordringen und diese beschädigen könnten.

### Bezugszeichenliste

### (Teil der Beschreibung)

- 1: Fluidkupplungsanordnung
- 1A: Kupplungshülse
- 1B: Kupplungsstecker
- 1C: Spalt zwischen Kupplungshülse 1A und Kupplungsstecker 1B
- 1D: dem Kupplungsstecker 1B zugeordnetes Ende der Kupplungshülse 1A
- 2: erste Ringnut im Kupplungsstecker 1B
- 3: O-Ring-Dichtung
- 4: zweite Ringnut im Kupplungsstecker 1B
- 5: Lippendichtring
- 5A: Ringkörper des Lippendichtrings 5
- 5B: Dichtlippe
- 6: Öffnung der Kupplungshülse 1A

## Patentansprüche

1. Fluidkupplungsanordnung (1), mindestens aufweisend eine Kupplungshülse (1A) und einen Kupplungsstecker (1B) und eine zwischen dem Kupplungsstecker (1B) und der Kupplungshülse (1A) angeordnete O-Ring-Dichtung, wobei Kupplungshülse (1A) und Kupplungsstecker (1B) rotatorisch, translatorisch und kardanisch gegeneinander bewegbar angeordnet sind, **dadurch gekennzeichnet, dass** die Fluidkupplungsanordnung (1) ein Schmutzschutzelement (5) aufweist, dass derart angeordnet ist, dass es sowohl radial zwischen den Kupplungsteilen (1A, 1B) als auch axial zwischen der O-Ring-Dichtung (3) und der zur Atmosphäre offenen Seite (1D, 6) der Fluidkupplungsanordnung (1) zu liegen kommt.

2. Fluidkupplungsanordnung (1) nach Anspruch 1, **dadurch gekennzeichnet, dass** das Schmutzschutzelement (5) als Lippendichtring (5) mit einem Ringkörper (5A) und einer umlaufenden Dichtlippe (5B) ausgelegt ist, wobei die Dichtlippe (5B) axial zu der zur Atmosphäre offenen Seite (1D, 6) der Fluidkupplungsanordnung (1) ausgerichtet ist.
